# EUROPÄISCHE PATENTANMELDUNG

(11) **EP 4 793 192 A1**
(43) Veröffentlichungstag der Anmeldung: **19.08.2026**
(21) Anmeldenummer: 25158336.5
(22) Anmeldetag: 17.02.2025
(51) Int. Cl.: B65D 43/02, B65D 50/04, A47J 42/38, B65D 41/06

(54) **VERSCHLUSS**

(71) Anmelder: BB Coffee Company GmbH, 82008 Unterhaching (DE)
(72) Erfinder: Braune, Bernd, 82008 Unterhaching (DE); Hofstetter, Franz Xaver, 83093 Bad Endorf (DE)
(74) Vertreter: Karakatsanis, Georgios

(57) **Zusammenfassung**

Es wird ein Verschluss vorgeschlagen, umfassend ein zylindrisches Aufnahmeteil (6) mit einer Zylinderachse und ein zylindrisches, zum Aufnahmeteil (6) koaxiales Einsatzteil (1), wobei das Einsatzteil (1) in das Aufnahmeteil (6) einsteckbar und darin durch Drehung in einer Drehrichtung um die Zylinderachse in eine Verschlussposition überführbar ist, wobei vor dem Erreichen der Verschlussposition zumindest zwei diametral gegenüberliegende in Umfangsrichtung rampenförmig ausgeführte Rastvorsprünge (3) des Einsatzteils an jeweils einen in Umfangsrichtung rampenförmig ausgeführten Rastvorsprung (8) des Aufnahmeteils (6) in Umfangsrichtung betrachtet anliegen, wobei beim weiteren Drehvorgang eine radiale Kraft auf die Rastvorsprünge (3) des Einsatzteils (1) erzeugbar ist, wobei das Einsatzteil (1) derart ausgeführt ist, dass durch die auf die Rastvorsprünge (3) wirkende Kraft die Rastvorsprünge (3) radial betrachtet nach Innen gedrückt werden, derart, dass durch die dadurch erzeugte elliptische Verformung des dem Aufnahmeteil (6) zugewandten Endes des Einsatzteils (1) die Rastvorsprünge (8) des Aufnahmeteils (6) von den Rastvorsprüngen (3) des Einsatzteils überfahren werden, wodurch eine stabile Verschlussposition erzielbar ist, welche durch eine Drehung des Einsatzteils (1) in eine Gegenrichtung mit Kraftaufwand in eine Offenposition überführbar ist.

## Beschreibung

Die vorliegende Erfindung bezieht sich auf einen Verschluss, insbesondere auf eine lösbare mechanische Verbindung zweier zylindrischer Teile, die durch Ineinanderstecken und Drehen verbunden und auch wieder getrennt werden können, gemäß dem Oberbegriff des Patentanspruchs 1.

Derartige Verschlüsse sind aus dem Stand der Technik bekannt; als Beispiel seien die so genannten Bajonettverschlüsse genannt.

Der vorliegenden Erfindung liegt die Aufgabe zugrunde, einen Verschluss der eingangs genannten Art anzugeben, welcher kostengünstig herstellbar, einfach handhabbar und zerstörungsfrei in die Offenposition überführbar ist.

Diese Aufgabe wird durch die Merkmale des Patentanspruchs 1 gelöst. Weitere Ausgestaltungen und Vorteile gehen aus den Unteransprüchen hervor.

Demnach wird ein Verschluss vorgeschlagen, umfassend ein zylindrisches Aufnahmeteil mit einer Zylinderachse und ein zylindrisches, zum Aufnahmeteil koaxiales Einsatzteil, wobei das Einsatzteil in das Aufnahmeteil einsteckbar und darin durch Drehung in einer Drehrichtung um die Zylinderachse in eine Verschlussposition überführbar ist.

Hierbei liegen vor dem Erreichen der Verschlussposition zumindest zwei diametral gegenüberliegende in Umfangsrichtung rampenförmig ausgeführte Rastvorsprünge des Einsatzteils an jeweils einen in Umfangsrichtung rampenförmig ausgeführten Rastvorsprung des Aufnahmeteils in Umfangsrichtung betrachtet an, wobei beim weiteren Drehvorgang zum Erreichen der Verschlussposition durch die Rastvorsprünge des Aufnahmeteils eine radiale, nach Innen gerichtete Kraft auf die Rastvorsprünge des Einsatzteils erzeugbar ist.

Erfindungsgemäß ist das Einsatzteil derart ausgeführt, dass durch die auf die Rastvorsprünge wirkende Kraft die Rastvorsprünge radial betrachtet nach Innen gedrückt werden, derart, dass durch die dadurch erzeugte elliptische Verformung des dem Aufnahmeteil zugewandten Endes des Einsatzteils die Rastvorsprünge des Aufnahmeteils von den Rastvorsprüngen des Einsatzteils überfahren werden, wodurch eine stabile Verschlussposition erzielbar ist, welche durch eine Drehung des Einsatzteils in eine Gegenrichtung mit Kraftaufwand in eine Offenposition überführbar ist. In der Verschlussposition wirkt keine radial nach Innen gerichtete Kraft auf die Rastvorsprünge des Einsatzteils, da die Rastvorsprünge des Einsatzteils und des Aufnahmeteils in Umfangsrichtung aneinander anliegen, so dass dieses die ursprüngliche Zylinderform aufweist.

Das Einsatzteil ist somit derart ausgeführt, dass es sich durch eine radial nach Innen auf die Rastvorsprünge wirkende Kraft im Wesentlichen elliptisch verformt, wobei die Nebenachse der Ellipse die beiden Rastvorsprünge miteinander verbindet.

Hierbei können das Aufnahmeteil und das Einsatzteil aus Metall und/oder Kunststoff hergestellt sein. Gemäß einer Ausgestaltung sind die Rastvorsprünge des Aufnahmeteils an der in der Verschlussposition in Umfangsrichtung betrachtet den Rastvorsprüngen des Einsatzteils zugewandten Seite steiler rampenförmig ausgeführt als an der in der Verschlussposition in Umfangsrichtung betrachtet den Rastvorsprüngen des Einsatzteils abgewandten Seite. Dadurch wird in vorteilhafter Weise gewährleistet, dass zum Öffnen des Verschlusses eine höhere Kraft erforderlich ist als zum Überführen des Verschlusses in die Verschlussposition.

Das Aufnahmeteil kann beispielsweise als Mühlenkörper und das Einsatzteil als Behälter für das Mahlgut einer handbetätigten Haushaltsmühle, insbesondere einer handbetätigten Kaffeemühle oder einer handbetätigten Mühle für Salz, Pfeffer, Getreide, Reis oder Gewürze ausgeführt sein. Alternativ kann das Aufnahmeteil beispielsweise in den Mühlenkörper und das Einsatzteil in den Behälter für das Mahlgut einer handbetätigten Haushaltsmühle, insbesondere einer handbetätigten Kaffeemühle oder einer handbetätigten Mühle für Salz, Pfeffer, Getreide, Reis oder Gewürze integriert oder einstückig integriert sein. Ferner kann das Einsatzteil ein Behälter und das Aufnahmeteil ein Deckel des Behälters sein.

Gemäß einer besonders vorteilhaften Ausgestaltung der Erfindung weist das Aufnahmeteil zwei diametral gegenüber liegende und sich radial nach innen erstreckende teilringförmige Vorsprünge definierter Steigung auf, an deren Ende, welches im mit dem Einsatzteil verbundenen Zustand den geringeren Abstand zu dem dem Einsatzteil zugewandten Ende des Aufnahmeteils aufweist, jeweils an der dem Einsatzteil abgewandten Seite der Vorsprünge ein in Umfangsrichtung rampenförmig ausgeführter Rastvorsprung vorgesehen ist.

Ferner weist die Mantelfläche des Einsatzteils an deren im mit dem Aufnahmeteil verbundenen Zustand dem Aufnahmeteil zugewandten Ende zwei diametral gegenüberliegende und in radialer Richtung elastisch verformbare Bereiche mit geringerer Dicke als die verbleibende Mantelfläche und zwei diametral gegenüberliegende, in Umfangsrichtung rampenförmig ausgeführte Rastvorsprünge auf, die im Wesentlichen um 90° in Umfangsrichtung zu der Mitte der elastisch verformbaren Bereiche versetzt vorgesehen sind.

Durch das Vorsehen der elastisch verformbaren Bereiche geringerer Dicke wird die elliptische Verformung des Einsatzteils bei einer radial nach Innen auf die Rastvorsprünge wirkende Kraft sowie die Rückkehr des Einsatzteils zu der ursprünglichen Zylinderform nach Abschluss der Drehbewegung zum Überführen des Verschlusses in die Verschlussposition erzielt.

Ferner schließt sich den elastisch verformbaren Bereichen jeweils ein weiterer Bereich geringerer Dicke an, der sich als teilringförmige, gewindeförmige Einkerbung mit definierter Steigung bis unterhalb der Rastvorsprünge erstreckt, um im Zusammenspiel mit den sich radial nach innen erstreckenden Vorsprüngen des Aufnahmeteils eine Schraubverbindung zu erzeugen.

Das Einsatzteil ist in das Aufnahmeteil einsteckbar und darin durch Drehung in einer Drehrichtung um die Zylinderachse in eine Verschlussposition überführbar, wobei vor dem Erreichen der Verschlussposition die Rastvorsprünge des Einsatzteils an jeweils einen Rastvorsprung des Aufnahmeteils in Umfangsrichtung betrachtet anliegen.

Beim weiteren Drehvorgang wird durch das Gleiten der Rastvorsprünge des Einsatzteils auf den Rastvorsprüngen des Aufnahmeteils eine radiale Kraft auf die Rastvorsprünge des Einsatzteils erzeugt, durch die die elastisch verformbaren Bereiche des Einsatzteils radial betrachtet nach außen gedrückt werden, derart, dass durch die dadurch erzeugte elliptische Verformung des dem Aufnahmeteil zugewandten Endes des Einsatzteils die Rastvorsprünge des Aufnahmeteils von den Rastvorsprüngen des Einsatzteils überfahren werden, wodurch eine stabile Verschlussposition erzielbar ist, die durch eine Drehung des Einsatzteils in eine Gegenrichtung mit Kraftaufwand in eine Offenposition überführbar ist.

Hierbei kann vorgesehen sein, dass insbesondere für den Fall, dass das Aufnahmeteil als Mühlenkörper und das Einsatzteil als Behälter für das Mahlgut einer handbetätigten Haushaltsmühle ausgeführt sind oder in diesen Bauteilen jeweils integriert sind, am Ende der teilringförmigen, gewindeförmigen Einkerbungen des Einsatzteils eine Tasche zur Aufnahme von Mahlgut vorgesehen ist. Dadurch wird der Vorteil erzielt, dass Mahlgut, welches die Funktionalität des Verschlusses beeinträchtigen kann, im Zuge der Drehbewegung in den Taschen aufgenommen wird.

Die Erfindung wird im Folgenden anhand der beigefügten Figuren, welche vorteilhafte Ausgestaltungen darstellen, beispielhaft näher erläutert. Gleiche Bezugszeichen bezeichnen gleiche Bauteile. Es zeigen:
Figur 1: eine schematische perspektivische Ansicht eines Einsatzteils gemäß einer ersten Ausgestaltung der Erfindung;
Figur 2: eine weitere perspektivische Ansicht des Einsatzteils gemäß Figur 1 ;
Figur 3: eine schematische perspektivische Ansicht eines Einsatzteils, welches sich vom Einsatzteil nach Figuren 1 und 2 dadurch unterscheidet, dass eine Tasche für das Mahlgut vorgesehen ist;
Figur 4: eine schematische perspektivische Ansicht eines Aufnahmeteils gemäß einer Ausgestaltung der Erfindung; und
Figur 5: eine schematische perspektivische Ansicht eines Einsatzteils gemäß Figuren 1, 2 und 3 zur Veranschaulichung der elliptischen Verformung während des Drehvorgangs.

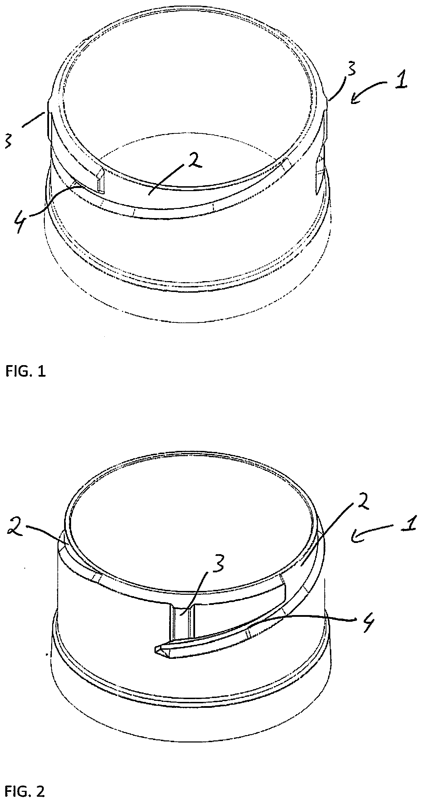

In Figur 1 wird ein erfindungsgemäß ausgeführtes Einsatzteil 1 dargestellt. Wie Figur 1 zu entnehmen, weist die Mantelfläche des Einsatzteils 1 an deren im mit dem Aufnahmeteil verbundenen Zustand dem Aufnahmeteil zugewandten Ende zwei diametral gegenüberliegende und in radialer Richtung elastisch verformbare Bereiche 2 mit geringerer Dicke als die verbleibende Mantelfläche und zwei diametral gegenüberliegende, in Umfangsrichtung rampenförmig ausgeführte Rastvorsprünge 3 auf, die im Wesentlichen um 90° in Umfangsrichtung zu der Mitte der elastisch verformbaren Bereiche 2 versetzt angeordnet sind.

Wie insbesondere aus Figur 2 ersichtlich, schließt sich den elastisch verformbaren Bereichen 2 jeweils ein weiterer Bereich geringerer Dicke an, der sich als teilringförmige, gewindeförmige Einkerbung 4 mit definierter Steigung bis unterhalb der Rastvorsprünge 3 erstreckt.

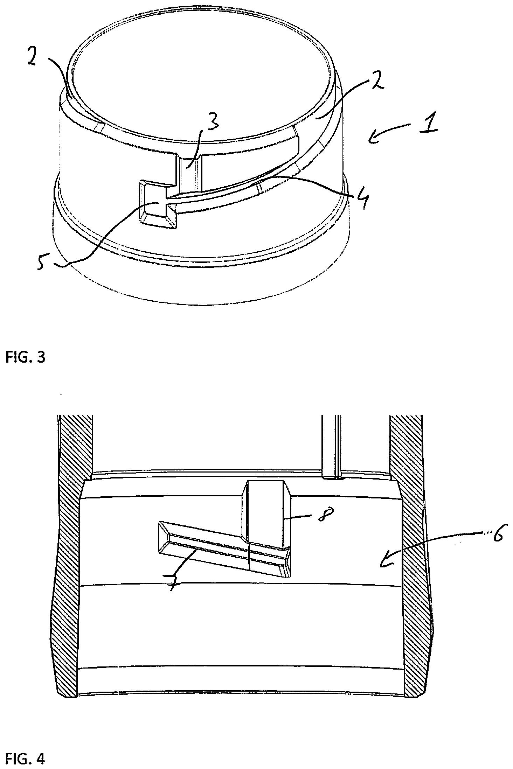

Die Ausgestaltung des Einsatzteils gemäß Figur 3 entspricht der Ausgestaltung gemäß Figuren 1 und 2 mit dem Unterschied, dass am Ende der teilringförmigen, gewindeförmigen Einkerbungen 4 des Einsatzteils jeweils eine Tasche 5 vorgesehen ist. Dies ist insbesondere vorteilhaft, wenn dass das Aufnahmeteil als Mühlenkörper und das Einsatzteil als Behälter für das Mahlgut einer handbetätigten Haushaltsmühle ausgeführt sind oder in diesen Bauteilen integriert sind, da dadurch Mahlgut, welches die Funktionalität des Verschlusses beeinträchtigen kann, im Zuge der Drehbewegung in den Taschen 5 aufgenommen wird.

In Figur 4 ist ein zum Einsatzteil gemäß Figuren 1, 2 und 3 korrespondierendes Aufnahmeteil 6 dargestellt. Hierbei weist das Aufnahmeteil 6 zwei diametral gegenüber liegende und sich radial nach innen erstreckende teilringförmige Vorsprünge 7 definierter Steigung auf, an deren Ende, welches im mit dem Einsatzteil verbundenen Zustand den geringeren Abstand zu dem dem Einsatzteil zugewandten Ende des Aufnahmeteils 6 aufweist, jeweils an der dem Einsatzteil abgewandten Seite der Vorsprünge 7 ein in Umfangsrichtung rampenförmig ausgeführter Rastvorsprung 8 vorgesehen ist. Das dargestellte Aufnahmeteil 6 ist bei dem gezeigten Beispiel in den Mühlenkörper einer handbetätigten Haushaltsmühle, z.B. einer Kaffeemühle integriert.

Die in Figuren 1, 2 und 3 gezeigten Einkerbungen 4 erzeugen erfindungsgemäß im Zusammenspiel mit den in Figur 4 gezeigten sich radial nach innen erstreckenden Vorsprüngen 7 des Aufnahmeteils 6 in der Verschlussposition eine Schraubverbindung.

Gemäß der Erfindung ist das Einsatzteil 1 in das Aufnahmeteil 6 einsteckbar und darin durch Drehung in einer Drehrichtung um die gemeinsame Zylinderachse in eine Verschlussposition überführbar, wobei vor dem Erreichen der Verschlussposition die Rastvorsprünge 3 des Einsatzteils 1 an jeweils einen Rastvorsprung 8 des Aufnahmeteils 6 in Umfangsrichtung betrachtet anliegen, wobei beim weiteren Drehvorgang eine radiale Kraft auf die Rastvorsprünge 3 des Einsatzteils 1 erzeugt wird.

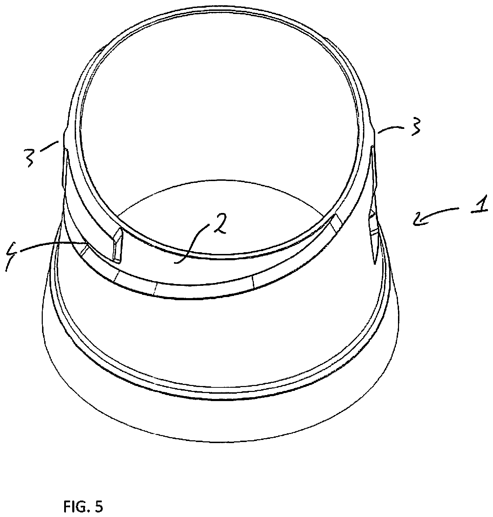

Dadurch werden die elastisch verformbaren Bereiche 2 des Einsatzteils 1 radial betrachtet nach außen gedrückt, derart, dass durch die dadurch erzeugte elliptische Verformung des dem Aufnahmeteil 6 zugewandten Endes des Einsatzteils 1 die Rastvorsprünge 8 des Aufnahmeteils 6 von den Rastvorsprüngen 3 des Einsatzteils 1 überfahren werden, was in einer stabilen Verschlussposition resultiert, die durch eine Drehung des Einsatzteils in eine Gegenrichtung mit Kraftaufwand in eine Offenposition überführbar ist. Die elliptische Verformung des Einsatzteils 1 wird anhand Figur 5 veranschaulicht.

Durch die erfindungsgemäße Konzeption wird ein Verschluss geschaffen, welcher kostengünstig herstellbar, einfach handhabbar und zerstörungsfrei in die Offenposition überführbar ist; in vorteilhafter Weise sind keine zusätzlichen Bauteile, wie beispielsweise Federlaschen erforderlich, da diese Funktionalität in das einsatzteil integriert ist.

## Patentansprüche

1. Verschluss, umfassend ein zylindrisches Aufnahmeteil (6) mit einer Zylinderachse und ein zylindrisches, zum Aufnahmeteil (6) koaxiales Einsatzteil (1), wobei das Einsatzteil (1) in das Aufnahmeteil (6) einsteckbar und darin durch Drehung in einer Drehrichtung um die Zylinderachse in eine Verschlussposition überführbar ist, wobei vor dem Erreichen der Verschlussposition zumindest zwei diametral gegenüberliegende in Umfangsrichtung rampenförmig ausgeführte Rastvorsprünge (3) des Einsatzteils an jeweils einen in Umfangsrichtung rampenförmig ausgeführten Rastvorsprung (8) des Aufnahmeteils (6) in Umfangsrichtung betrachtet anliegen, wobei beim weiteren Drehvorgang eine radiale Kraft auf die Rastvorsprünge (3) des Einsatzteils (1) erzeugbar ist, wobei das Einsatzteil (1) derart ausgeführt ist, dass durch die auf die Rastvorsprünge (3) wirkende Kraft die Rastvorsprünge (3) radial betrachtet nach Innen gedrückt werden, derart, dass durch die dadurch erzeugte elliptische Verformung des dem Aufnahmeteil (6) zugewandten Endes des Einsatzteils (1) die Rastvorsprünge (8) des Aufnahmeteils (6) von den Rastvorsprüngen (3) des Einsatzteils überfahren werden, wodurch eine stabile Verschlussposition erzielbar ist, welche durch eine Drehung des Einsatzteils (1) in eine Gegenrichtung mit Kraftaufwand in eine Offenposition überführbar ist.

2. Verschluss nach Anspruch 1, **dadurch gekennzeichnet, dass** die Rastvorsprünge (8) des Aufnahmeteils (6) an der in der Verschlussposition in Umfangsrichtung betrachtet den Rastvorsprüngen (3) des Einsatzteils (1) zugewandten Seite steiler rampenförmig ausgeführt sind als an der in der Verschlussposition in Umfangsrichtung betrachtet den Rastvorsprüngen (3) des Einsatzteils (1) abgewandten Seite.

3. Verschluss nach Anspruch 1 oder 2, **dadurch gekennzeichnet, dass** das Aufnahmeteil (6) und das Einsatzteil (1) aus Metall und/oder Kunststoff hergestellt sind.

4. Verschluss nach Anspruch 1, 2 oder 3, wobei das Aufnahmeteil (6) zwei diametral gegenüber liegende und sich radial nach innen erstreckende Vorsprünge (7) definierter Steigung aufweist, an deren Ende, welches im mit dem Einsatzteil (1) verbundenen Zustand den geringeren Abstand zu dem dem Einsatzteil (1) zugewandten Ende des Aufnahmeteils (6) aufweist, jeweils an der dem Einsatzteil (1) abgewandten Seite der Vorsprünge (7) ein in Umfangsrichtung rampenförmig ausgeführter Rastvorsprung (8) vorgesehen ist,
wobei die Mantelfläche des Einsatzteils (1) an deren im mit dem Aufnahmeteil (6) verbundenen Zustand dem Aufnahmeteil zugewandten Ende zwei diametral gegenüberliegende und in radialer Richtung elastisch verformbare Bereiche (2) mit geringerer Dicke als die verbleibende Mantelfläche und zwei diametral gegenüberliegende, in Umfangsrichtung rampenförmig ausgeführte Rastvorsprünge (3) aufweist, die im Wesentlichen um 90° in Umfangsrichtung zu der Mitte der elastisch verformbaren Bereiche (2) versetzt vorgesehen sind,
wobei sich den elastisch verformbaren Bereichen (2) jeweils ein weiterer Bereich geringerer Dicke anschließt, der sich als teilringförmige, gewindeförmige Einkerbung (4) mit definierter Steigung bis unterhalb der Rastvorsprünge (3) erstreckt, um im Zusammenspiel mit den sich radial nach innen erstreckenden Vorsprüngen (7) des Aufnahmeteils (6) eine Schraubverbindung zu erzeugen,
wobei das Einsatzteil (1) in das Aufnahmeteil (6) einsteckbar und darin durch Drehung in einer Drehrichtung um die Zylinderachse in eine Verschlussposition überführbar ist, wobei vor dem Erreichen der Verschlussposition die Rastvorsprünge (3) des Einsatzteils an jeweils einen Rastvorsprung (8) des Aufnahmeteils in Umfangsrichtung betrachtet anliegen, wobei beim weiteren Drehvorgang eine radiale Kraft auf die Rastvorsprünge (3) des Einsatzteils (1) erzeugt wird, durch die die elastisch verformbaren Bereiche (2) des Einsatzteils (1) radial betrachtet nach außen gedrückt werden, derart, dass durch die dadurch erzeugte elliptische Verformung des dem Aufnahmeteil (6) zugewandten Endes des Einsatzteils (1) die Rastvorsprünge (8) des Aufnahmeteils (6) von den Rastvorsprüngen (3) des Einsatzteils (1) überfahren werden, wodurch eine stabile Verschlussposition erzielbar ist, welche durch eine Drehung des Einsatzteils (1) in eine Gegenrichtung mit Kraftaufwand in eine Offenposition überführbar ist.

5. Verschluss nach Anspruch 4, **dadurch gekennzeichnet, dass** am Ende der teilringförmigen, gewindeförmigen Einkerbungen (4) des Einsatzteils (1) eine Tasche (5) vorgesehen ist.

6. Verschluss nach Anspruch 1, 2, 3, 4 oder 5, **dadurch gekennzeichnet, dass** das Aufnahmeteil (6) der Mühlenkörper und dass das Einsatzteil (1) ein Behälter für das Mahlgut einer handbetätigten Haushaltsmühle, insbesondere einer handbetätigten Kaffeemühle oder einer handbetätigten Mühle für Salz, Pfeffer, Getreide oder Gewürze ist oder dass das Aufnahmeteil (6) in den Mühlenkörper und das Einsatzteil (1) in den Behälter für das Mahlgut einer handbetätigten Haushaltsmühle, insbesondere einer handbetätigten Kaffeemühle oder einer handbetätigten Mühle für Salz, Pfeffer, Getreide oder Gewürze integriert oder einstückig integriert ist, oder dass das Einsatzteil ein Behälter und das Aufnahmeteil ein Deckel des Behälters ist.
